# EUROPEAN PATENT APPLICATION

(11) **EP 1 679 834 A1**
(43) Date of publication of application: **12.07.2006**
(21) Application number: 04793241.3
(22) Date of filing: 29.10.2004
(51) Int. Cl.: H04L 12/56, H04Q 7/22

(54) **COMMUNICATION HANDOVER METHOD, COMMUNICATION HANDOVER PROGRAM, AND COMMUNICATION SYSTEM**

(30) Priority: 30.10.2003 JP 2003371160
(71) Applicant: MATSUSHITA ELECTRIC INDUSTRIAL CO., LTD., Kadoma-shi, Osaka 571-8501 (JP)
(72) Inventor: HORI, Takako.,Mat.El.Ind.Co.,Ltd., IP Dev. Center, Osaka-shi, Osaka 540-6319 (JP); ASOU, Keigo., Mat.El.Ind.Co.,Ltd., IP Dev. Center, Osaka-shi, Osaka 540-6319 (JP)
(74) Representative: Grünecker, Kinkeldey, Stockmair & Schwanhäusser Anwaltssozietät
(86) International application number: PCT/JP2004/016140
(87) International publication number: WO 2005/043839

(57) **Abstract**

A technique which realizes an efficient handover by reducing loads on a mobile node and an access router and communication traffics thereof while keeping a packet loss rate in a fast handover technology is disclosed, and according to that technique, a mobile node (MN 10) has a correspondence relationship between information (link layer address of an AP) on an access point (AP 22, 23, 32, 33) and information (link layer address of an AR, and a network prefix and a prefix length of a subnet 20, 30 to which the AR belongs) on an access router (AR 21, 31) having control over the AP, and, by referring to the correspondence relationship, generates an NCoA of a subnet which is the destination of movement in L2 handover between different subnets, does not change an NCoA and executes only the L2 handover in the L2 handover in the same subnet, and performs a conventional fast handover when there is no correspondence relationship relating to an AP at the destination of the L2 handover.

## Description

### TECHNICAL FIELD

The present invention relates to a communication handover method, a communication handover program, and a communication system that speeds up the handover of a mobile terminal (mobile node) which carries out radio communication, and more particularly, to a technology that speeds up a handover at a mobile node which carries out radio communication using the mobile IPv6 (Mobile Internet Protocol version 6) protocol that is the next generation Internet protocol.

### BACKGROUND ART

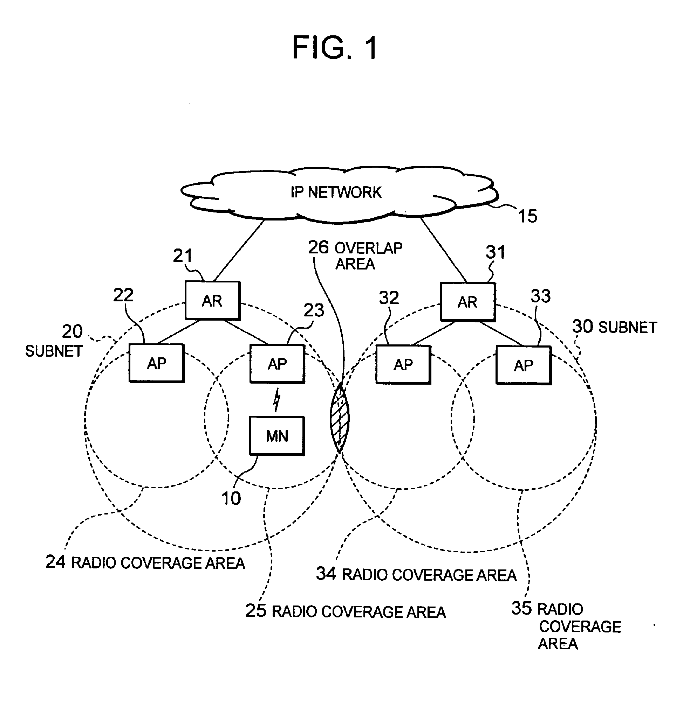

As a technology which provides a user who accesses a communication network like the Internet through a radio network from a mobile node while moving with seamless connection to the communication network, one which uses the mobile IPv6 as the next generation Internet protocol becomes popular. A radio communication system which uses the mobile IPv6 will be explained with reference to FIG. 1. The technology regarding the mobile IPv6 which will be explained below is disclosed in, for example, Non-patent document 1 described below.

The radio communication system illustrated in FIG. 1 includes an IP network (communication network) 15 like the Internet, a plurality of subnets 20, 30 (also called sub networks) which are connected to the IP network 15, and a mobile node (MN: Mobile Node) 10 which can be connected to any of the plurality of subnets 20, 30. In FIG. 1, two subnets 20, 30 are illustrated as the plurality of subnets 20, 30.

The subnet 20 comprises an access router (AR: Access Router) 21 which performs routing of IP packets (packet data), and a plurality of access points (AP: Access Point) 22, 23 which respectively constitute unique radio coverage areas (communication available areas) 24, 25. Each of those APs 22, 23 is connected to the AR 21, which is connected to the IP network 15. In FIG. 1, two APs 22, 23 are illustrated as the plurality of APs 22, 23. The subnet 30 is constituted in the same connection mode as that of the subnet 20 by an AR 31, and a plurality of APs 32, 33.

The AR 21, which is a component of the subnet 20, and the AR 31, which is a component of the subnet 30, can communicate with each other over the IP network 15, i.e., the subnet 20 and the subnet 30 are connected together over the IP network 15.

Suppose that in the radio communication system illustrated in FIG. 1, the MN 10 has started radio communication with the AP 23 in the radio coverage area 25. In this situation, in a case where an IPv6 address assigned to the MN 10 is not adequate for the IP address system of the subnet 20, the MN 10 present in the radio coverage area 25 acquires an IPv6 address adequate for the subnet 20, i.e., a care-of address (CoA: Care of Address) through the radio communication with the AP 23.

Methods for the MN 10 to acquire a CoA include a method by which a DHCP server assigns it in a stateful mechanism by a technique, such as the DHCPv6 (Dynamic Host Configuration Protocol for IPv6), and a method of acquiring the network prefix and prefix length of the subnet 20 from the AR 21, and combining the network prefix and the prefix length, both obtained from the AR 21, with the link layer address of the MN 10 at the MN 10, thus automatically generating a CoA in a stateless mechanism.

The MN 10 registers (Binding Update: BU) the acquired CoA at a home agent (router on its home network), and a certain communication party (Correspondent Node: CN), thereby ensuring packet data transmission and reception in the subnet 20.

Accordingly, packet data transmitted from a predetermined communication party to the MN 10 is transferred to the MN 10 through the AR 21 and the AP 23 based on the CoA of the MN 10, and packet data transmitted to a desired communication party by the MN 10 is transferred to the desired communication party through the AP 23 and the AR 21. Packet data which is directed to the MN 10 and is transmitted to the home network is sent to the AR 21 of the subnet 20 based on the CoA of the MN 10 registered at the home agent, and is transferred to the MN 10 through the AP 23.

The radio communication system using the mobile IPv6 and illustrated in FIG. 1 is structured in such a way that radio communication at the MN 10 continues by using the CoA even if the MN 10 moves from one subnet to another. According to the technique associated with those procedures (general IPv6 handover) concerning the above-described acquisition of the CoA of the MN 10, however, acquisition and registration (BU) of a new CoA (hereinafter, NCoA) to be used by the subnet 30 are carried out after the MN 10 moves and connects to the AP 32, i.e., after L2 handover is carried out. That is, during the period from the initiation of the L2 handover by the MN 10 to the completion of the registration of the NCoA, the CoA of the MN 10 remains as an old (Previous) CoA (hereinafter, PCoA) used by the subnet 20, so that packet data transmitted from the MN 10, and packets transmitted to the MN 10 will all be lost.

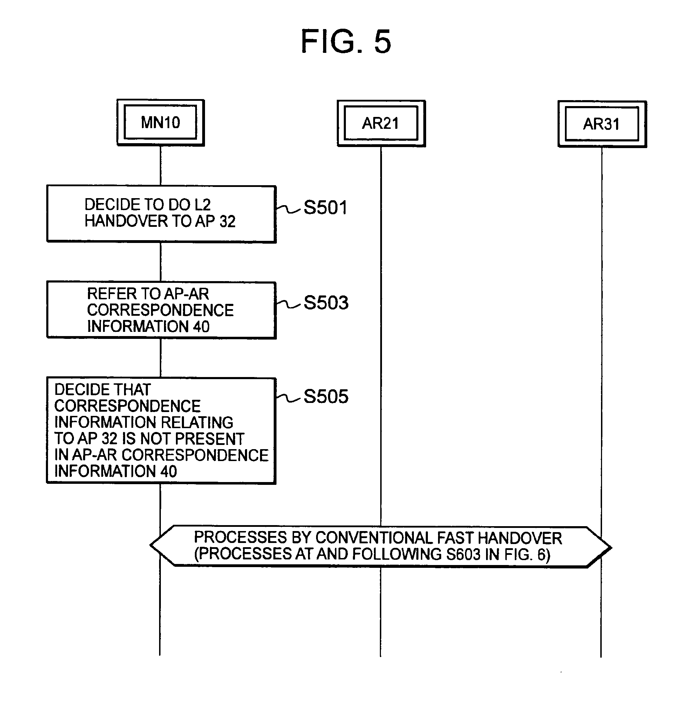

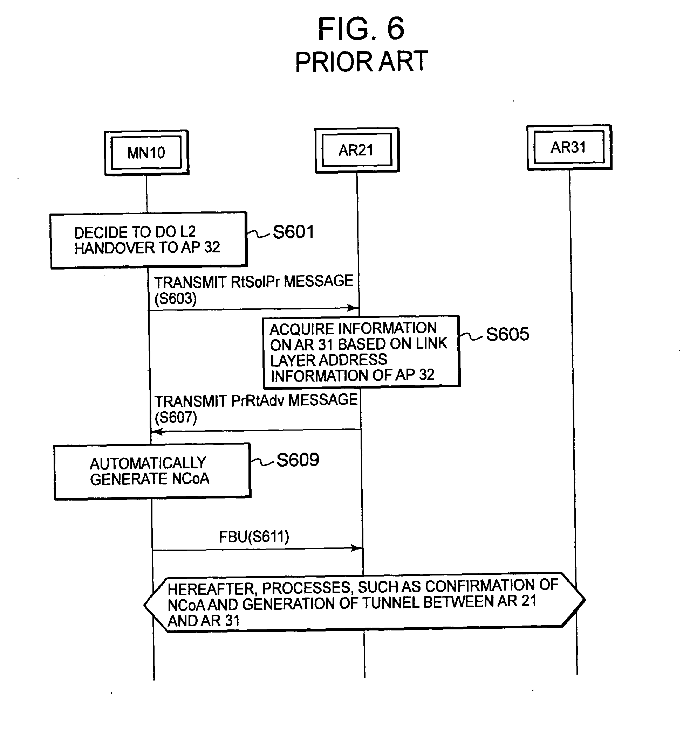

As a technique which improves the rate of a packet loss caused by the handover of such an MN 10 to ensure smooth continuation of radio communication even if the MN 10 moves, the fast handover technology which is disclosed in, for example, Non-patent Document 2 described below is known. Hereinafter, an explanation will be given of the fast handover technology with reference to FIGS. 1 and 6.

FIG. 6 is a sequence chart illustrating an example of fast handover by the conventional technique. The sequence chart of FIG. 6 illustrates the individual processes of the MN10, the AR 21, and the AR 31 along a time axis in a case where the MN 10 moves from inside the radio coverage area 25 formed by the AP 23 into a radio coverage area 34 formed by the AP 32 through an overlap area 26, in the radio communication system illustrated in FIG. 1. The sequence chart shown in FIG. 6 illustrates the steps that the MN 10 acquires an NCoA in the subnet 20 in a stateless mechanism before carrying out the L2 handover in the fast handover.

When a radio signal from the AP 23 currently in communication becomes weak due to movement in the radio coverage area 25, the MN 10 starts searching for another communicatable AP. When it enters in the overlap area 26 where the radio coverage area 25 and the radio coverage area 34 overlap with each other (hatched area in FIG. 1), listening to a radio signal from the AP 32 is possible, i.e., the AP 32 is found. In the overlap area 26, the MN 10 can listen to both the radio signal from the AP 23 and the radio signal from the AP 32.

In a case where it is determined as preferable to stop communicating with the AP 23 and start communicating with the AP 32 due to some conditions (for example, in a case where it is figured out that the radio signal strength from the AP 32 is stronger from the result of comparison of the radio signal strength from the AP 23 with the radio signal strength from the AP 32), the MN 10 decides to switch connection (L2 handover) of an AP at the communication destination (step S601: DECIDE TO DO L2 HANDOVER TO AP32).

Next, the MN10 which has decided to do handover sends an RtSolPr (Router Solicitation for Proxy) message for requesting the AR 21 for information necessary to execute a handover (step S603: TRANSMIT RtSolPr MESSAGE). The RtSolPr message includes the link layer address of the AP 32 received by the MN 10 from the AP 32, i.e., the MN 10 notifies the AR 21 of the link layer address of the AP 32 which forms the radio coverage area 34 at a new destination. In a case of radio communication by the IEEE 802.11, for example, the AP 32 regularly broadcasts a beacon including the link layer address (MAC address), so that all nodes in the radio coverage area 34 can acquire the link layer address of the AP 32. RtSolPr may stand for "Router Solicitation for Proxy Advertisement".

The AR 21 having received the RtSolPr message from the MN 10 acquires information on the AR 31 connected to the AP 32 (the link layer address of the AR 31, and the network prefix and prefix length of the subnet 30 to which the AR 31 belongs) by an arbitrary method, based on information on the link layer address of the AP 32 included in the RtSolPr message (step S605: ACQUIRE INFORMATION ON AR 31 BASED ON LINK LAYER ADDRESS OF AP 32).

Regarding the method of acquiring the information on the AR 31 (the above-described arbitrary method), no method is particularly defined for the fast handover, and it is possible to apply various methods, such as a method of referring to the correspondence relationship between the AR 31 and the AP 32 set in the AR 21 beforehand, and a method by which AR 21 itself searches for an AR which has control over the AR 32 over the IP network 15.

Then, the AR 21 transmits the MN 10 a PrRtAdv (Proxy Router Advertisement) message including information on the AR 31 acquired at step S605, as a response to the RtSolPr message (step S607: TRANSMIT PrRtAdv MESSAGE). Accordingly, the MN 10 acquires information on the AR 31 which has control over the AP 32, and combines the network prefix and the prefix length of the subnet 30 with the link layer address of the MN 10, thereby generating an NCoA which may be adequate for the subnet 30 constituted by the AR 31 (step S609: AUTOMATICALLY GENERATE NCoA).

After the generation of the NCoA, the MN 10 notifies the AR 21 of the NCoA (FBU: Fast Binding Update) (step S611: FBU), and fast handover is finished through processes, such as confirmation of the NCoA at the AR 31, and tunnel generation between the AR 21 and the AR 31.

As described above, in the case of the fast handover technology, before executing the L2 handover, the MN 10 acquires the NCoA to be used in the subnet 30 beforehand, and notifies the AR 21 of the NCoA, thereby generating a tunnel between the AR 21 and the AR 31. Accordingly, even during the period in which the MN 10 performs the L2 handover, switches connection from the AP 23 to the AP 32, moves to the subnet 30, and formally registers (BU) the NCoA acquired beforehand, packet data transmitted toward the PCoA of the MN 10 used in the subnet 20 is transferred to the MN 10 through the AR 31 and the AP 32 via the tunnel, and packet data to be transmitted from the MN 10 arrives at the AR 21 through the AP 32 and the AR 31 via the tunnel, and is transmitted to a communication party from the AR 21.
Non-Patent document 1: D. Johnson, C. Perkins and J. Arkko, "Mobility Support in IPv6", draft-ietf-mobileip-ipv6-24, June 2003
Non-Patent Document 2: Rajeev Koodli "Fast Handovers for Mobile IPv6", draft-ietf-mobileip-fast-mipv6-08, October 2003

### DISCLOSURE OF THE INVENTION

### MEANS FOR SOLVING THE PROBLEM

The above-described fast handover technology, however, has the following first to third problems.

### <First Problem>

Because the L2 handover is out of the mobile IPv6 specification, it is not possible to figure out a timing at which the MN 10 terminates communication with the AP 23 (timing to do the L2 handover) beforehand in the layer of the mobile IPv6. If the timing of the L2 handover meets the following case (1) or (2), the fast handover is not properly completed, so that reduction in the packet loss rate that is the object of the fast handover technology cannot be accomplished.

(1) In a case where the MN 10 terminates communication with the AP 23 before transmitting an RtSolPr message to the AR 21 at step S603, the MN 10 cannot transmit the RtSolPr message to the AR 21.
(2) In a case where the MN 10 terminates communication with the AP 23 before receiving a PrRtAdv message from the AR 21 at step S607, the MN 10 cannot receive the PrRtAdv message.

The above-described cases (1) and (2) may be paraphrased as a case where information on the AR 31 necessary at the time of automatically generating an NCoA at step S609 cannot be received through the AP 23 because the connection with the AP 23 is terminated. Those cases may happen particularly when the MN 10 moves at high speed.

### <Second Problem>

In the example explained with reference to FIG. 6, because the MN 10 moves to a different subnet, it is essential to acquire an NCoA to be used in the new subnet. In contrast, in a case where the MN 10 moves from the radio coverage area 25 formed by the AP 23 to a radio coverage area 24 formed by the AP 22 (in a case where connection with an AP is switched over in the same subnet 20), for example, although the L2 handover from the AP 23 to the AP 22 is carried out, it is the movement in the same subnet 20, and changing a CoA is unnecessary.

In a case where the MN 10 executes the L2 handover between the APs regardless of movement in the same subnet or movement between different subnets, however, processes for the fast handover are executed. That is, even in the case of the L2 handover in the same subnet 20, it is figured out that a change in the CoA is not necessary only after an RtSolPr message is transmitted to the AR 21 in the step S603, and the content of a PrRtAdv message received from the AR 21 at step S607 is referred to.

That is, according to the fast handover technology, transmission and reception of an RtSolPr message and a PrRtAdv message are carried out even at the time of the L2 handover by the MN 10 within the same subnet just for confirming that no change in the CoA is necessary, which is quite inefficient.

### <Third Problem>

Further, there is a problem such that every time the MN 10 is about to do the L2 handover, the AR 21 needs to perform the process of the step S603, and an RtSolPr message and a PrRtAdv message are to be transmitted and received between the MN 10 and the AR 21. That is, at the time of the L2 handover by the MN 10, an increment in the load of a process in the AR 21 and an increment in communication traffic between the MN 10 and the AR 21 occur. In particular, when a plurality of APs 22, 23 having narrow radio coverage areas are under the control of the AR 21, and in an environment where there are multiple MNs 10 which repeat movements frequently, a considerable load is applied to the AR 21, and communication traffic between the MN 10 and the AR 21 significantly increases.

The present invention has been made in view of the above-described problems, and aims at providing a communication handover method, a handover program, and a communication system which can realize an efficient handover by reducing loads on a mobile node and an access router and communication traffics thereof while maintaining a packet loss rate improved by the fast handover technology.

### Means for Solving the Problems

To achieve the object, a communication handover method according to the present invention is for use in a mobile node in a communication system in which a plurality of access routers each constituting a subnet are connected together over a communication network and at least one or more of access points forming a unique communication available area are connected to each of the plurality of access routers, the mobile node being so structured as to communicate with the access router connected with the access points, through radio communication with the access points within the communication available area, and comprises:
a storing step of storing correspondence information describing a correspondence relationship between information on the access points and information on the access router connected to the access points into a predetermined information storage means of the mobile node;
a reception step of receiving information on another access point from the another access point when communication is switched over from an access point currently in communication to the another access point;
an acquisition step of acquiring information on that access router to which the another access point is connected from the correspondence information based on the information on the another access point received at the reception step; and
an address generation step of generating address information in the subnet constituted by the access router, from the information on the access router acquired at the acquisition step.
The structure can realize an efficient handover by reducing loads on a mobile node and an access router and communication traffics thereof while maintaining a packet loss rate improved by the fast handover technology.

Further, the communication handover method according to the invention comprises an address information transmission step of transmitting the address information generated at the address generation step to the access router to which the access point currently in communication is connected, through the access point currently in communication.
This structure can allow an access router to transfer packet data to a mobile node using address information generated from correspondence information by the mobile node.

To achieve the object, a communication handover method according to the invention is for use in a mobile node in a communication system in which a plurality of access routers each constituting a subnet are connected together over a communication network and at least one or more of access points forming a unique communication available area are connected to each of the plurality of access routers, the mobile node being so structured as to communicate with the access router connected with the access points, through radio communication with the access points within the communication available area, and comprises:
a storing step of storing correspondence information describing a correspondence relationship between information on the access points and information on the access router connected to the access points into a predetermined information storage means of the mobile node;
a reception step of receiving information on another access point from the another access point when communication is switched over from an access point currently in communication to the another access point;
an acquisition step of acquiring information on that access router to which the another access point is connected from the correspondence information based on the information on the another access point received at the reception step;
a determination step of determining from the information on the access router acquired at the acquisition step whether or not changing address information currently assigned in connection of the subnet is necessary when communication is switched from the access point currently in communication to the another access point; and
an address control step of performing such control as to continuously use the currently assigned address information upon determination that it is not necessary to change the address information at the determination step.
The structure can realize an efficient handover by reducing loads on an MN and an AR and communication traffics thereof while maintaining a packet loss rate improved by the fast handover technology, and particularly, can prevent increases in the load on an AR and the communication traffic thereof at the time of the L2 handover in the same subnet.

Further, in the communication handover method according to the invention, at the determination step, comparison is made to check whether or not information relating to the subnet of the access router connected to the access point currently in communication and information relating to the subnet of the access router connected to the another access point match with each other, and it is determined that changing the address information is not necessary when both information match with each other.
The structure can allow a mobile node to surely grasp whether or not a change in connection of a subnet occurs before and after switching by a handover.

Further, the communication handover method according to the invention comprises a process switching step of performing a process based on conventional handover when the information on the access router to which another access point is connected cannot be acquired from the correspondence information at the acquisition step.
The structure can ensure switching to a process by the conventional fast handover to surely perform a process associated with a handover even when a mobile node cannot generate address information in a subnet from correspondence information.

Further, the communication handover method according to the invention comprises:
a correspondence information reception step of receiving information relating to a change in the correspondence information from a predetermined communication apparatus which manages the correspondence information or the access router; and
a correspondence information update step of updating the correspondence information stored in the predetermined information storage means with the information relating to the change in the correspondence information.
With the structure, when correspondence information is updated, a mobile node can receive the updated contents of the correspondence information, and can always hold latest correspondence information.

Further, the communication handover method according the invention comprises an information check step of periodically checking the predetermined communication apparatus or the access router to see whether or not there is information relating to a new change of the correspondence information.
The structure can allow a mobile node to dynamically check in a given cycle whether or not correspondence information has been updated.

Further, in the communication handover method according to the invention, a link layer address of the access point is used as the information on the access point, and a link layer address of the access router, a network prefix and a prefix length of the subnet constituted by the access router are used as the information on the access router.
The structure can allow a mobile node to surely execute an efficient handover process, and improves the compatibility with a communication system using the fast handover technology of the mobile IPv6.

Further, in the communication handover method according to the invention, the correspondence information describes a correspondence relationship between the information on the access point in the subnet to which the mobile node is currently connected, and the information on the access router, and a correspondence relationship between the information on the access point in the subnet present in a neighborhood of the subnet to which the mobile node is currently connected and the information on the access router.
With the structure, a mobile node can store only least necessary correspondence information, thus reducing the data capacity for correspondence information, and can relieve loads on a process of reading correspondence information, a search process for desired information, etc.

Further, in the communication handover method according to the invention, the correspondence information describes only a correspondence relationship relating to the access router which employs a scheme of permitting the mobile node to generate the address information in the subnet, and the access point connected to the access router.
The structure can allow a mobile node to generate address information only when connection is switched to a subnet capable of generating address information in a stateless mechanism.

The invention provides a communication handover program for allowing a computer to execute the communication handover method.

To achieve the object, according to the invention, there is provided a communication system in which a plurality of access routers each constituting a subnet are connected together over a communication network and at least one or more of access points forming a unique communication available area are connected to each of the plurality of access routers, and a mobile node present in the communication available area is so structured as to communicate with the access router connected with the access points, through radio communication with the access points, wherein
the mobile node has correspondence information storage means for storing correspondence information describing a correspondence relationship between information on the access points and information on the access router connected to the access points into a predetermined information storage means of the mobile node, and
the mobile node is structured in such a way that when communication is switched over from an access point currently in communication to another access point, information on that access router to which the another access point is connected is acquired based on the information on the another access point received from the another access point by referring to the correspondence information, and address information in the subnet constituted by the access router is generated from the acquired information on the access router.
The structure can realize an efficient handover by reducing loads on a mobile node and an access router and communication traffics thereof while maintaining a packet loss rate improved by the fast handover technology.

To achieve the object, according to the invention, there is provided a communication system in which a plurality of access routers each constituting a subnet are connected together over a communication network and at least one or more of access points forming a unique communication available area are connected to each of the plurality of access routers, and a mobile node present in the communication available area is so structured as to communicate with the access router connected with the access points, through radio communication with the access points, wherein
the mobile node has correspondence information storage means for storing correspondence information describing a correspondence relationship between information on the access points and information on the access router connected to the access points into a predetermined information storage means of the mobile node, and
the mobile node is structured in such a way that when communication is switched over from an access point currently in communication to another access point, information on that access router to which the another access point is connected is acquired based on the information on the another access point received from the another access point by referring to the correspondence information, and it is determined from the acquired information on the access router whether or not changing address information currently assigned in connection of the subnet is necessary when communication is switched from the access point currently in communication to the another access point, and the currently assigned address information is continuously used upon determination that it is not necessary to change the address information.
The structure can realize an efficient handover by reducing loads on an MN and an AR and communication traffics thereof while maintaining a packet loss rate improved by the fast handover technology, and particularly, can prevent increases in the load on an AR and the communication traffic thereof at the time of the L2 handover in the same subnet.

Further, the communication system according to the invention is structured in such a way as to execute a process by conventional handover when the mobile node cannot acquire the information on the access router to which another access point is connected, from the correspondence information.
The structure can ensure switching to a process by the conventional fast handover to surely perform a process associated with a handover even when a mobile node cannot generate address information in a subnet from correspondence information.

Further, the communication system according to the invention is structured in such a way that a predetermined communication apparatus which manages the correspondence information is connected to the communication network, and is so structured as to transmit the correspondence information to the mobile node.
With this structure, a predetermined communication apparatus which is connected to the communication network and can grasp the network configuration manages correspondence information, and a mobile node has only to receive and store correspondence information transmitted from the predetermined communication apparatus.

Further, the communication system according to the invention is structured in such a way that when a change in the information on the access point or the information on the access router occurs, the predetermined communication apparatus receives the information on the access point or the information on the access router after generation of the change, from the access router, updates the correspondence information managed by the predetermined communication apparatus, and informs the mobile node that the correspondence information has been changed.
With this structure, a predetermined communication apparatus which is connected to the communication network and can grasp the network configuration manages correspondence information, and a mobile node has only to receive and store correspondence information transmitted from the predetermined communication apparatus.

Further, the communication system according to the invention is structured in such a way that management of the correspondence information is performed by the access router to realize the predetermined communication apparatus by the access router.
With the structure, access router capable of executing a process by the conventional fast handover can acquire correspondence information, and the compatibility with a communication system using the fast handover technology of the mobile IPv6 is improved.

### ADVANTAGEOUS EFFECT OF THE INVENTION

The invention provides a communication handover method, a communication handover program and a communication system which have the above-described structures, thereby realizing an efficient handover by reducing loads on an MN and an AR and communication traffics thereof while maintaining a packet loss rate improved by the fast handover technology.

### BRIEF DESCRIPTION OF THE DRAWINGS

[FIG. 1] An exemplary diagram showing the structure of a radio communication system common to the present invention and the conventional technique.
[FIG. 2] An exemplary diagram showing one example of AP-AR correspondence information which is stored in an MN according to an embodiment of the invention.
[FIG. 3] A sequence chart illustrating a first operational example when an MN performs an L2 handover in a radio communication system according to the embodiment of the invention.
[FIG. 4] A sequence chart illustrating a second operational example when an MN performs the L2 handover in the radio communication system according to the embodiment of the invention.
[FIG. 5] A sequence chart illustrating a third operational example when an MN performs the L2 handover in the radio communication system according to the embodiment of the invention.
[FIG. 6] A sequence chart illustrating one example of a fast handover according to the conventional technique.

### BEST MODE FOR CARRYING OUT THE INVENTION

An embodiment of the invention will now be described with reference to FIGS. 1 to 5. FIG. 1 is an exemplary diagram showing the structure of a radio communication system common to the present invention and the conventional technique, and the structure of the radio communication system shown in FIG. 1 has been explained in the description of the conventional technique. The radio communication system shown in FIG. 1 is referred to in the description of the embodiment of the invention.

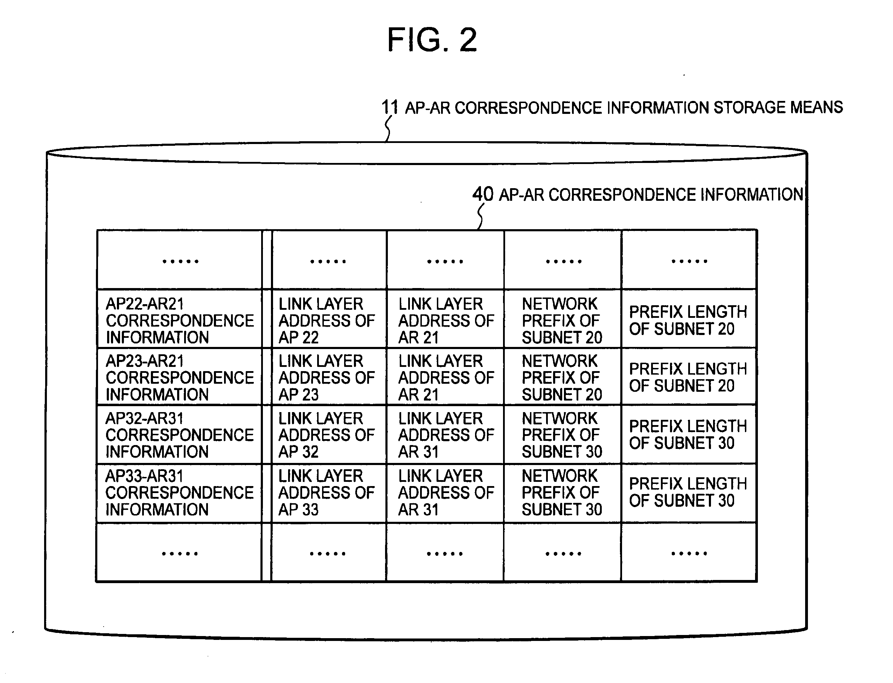

FIG. 2 is an exemplary diagram showing one example of AP-AR correspondence information which is stored in an MN according to an embodiment of the invention. A significant difference between the invention and the conventional technique lies in that an MN of the invention has AP-AR correspondence information storage means 11 for storing AP-AR correspondence information 40. An MN 10 need not be provided with a special information storage medium as the AP-AR correspondence information storage means 11, and the AP-AR correspondence information storage means 11 can be realized by an arbitrary information storage medium of the MN 10, such as a hard disk, a RAM (Random Access Memory) or a ROM (Read Only Memory) in the MN 10.

The AP-AR correspondence information 40 to be stored in the AP-AR correspondence information storage means 11 has at least information indicating the connection relationship between an AP and an AR (information indicating which AP is connected to which AR, i.e., information indicating which AP is under the control of each AR), and the link layer address of each AP, a network prefix and a prefix length of a subnet to which each AR belongs. When the link layer address of an AP is known, for example, the link layer address of an AR which is at an upper level of the AP is known from information indicating the connection relationship between APs and ARs by referring to the AP-AR correspondence information 40, making it possible to acquire the network prefix and prefix length of a subnet to which the upper-level AR belongs.

Correspondence information is set in the AP-AR correspondence information 40 shown in FIG. 2 for each connection of an AP and an AR, and in association with the link layer address of an AP, a set of the link layer address of an AR which has control over the AP, the network prefix of a subnet of the AR having control over the AP, and the prefix length of the subnet of the AR having control over the AP is set in each correspondence information. With the structure of the AP-AR correspondence information 40, when the link layer address of an AP is known, for example, it is possible to refer to the link layer address of an AR which is at an upper level of the AP, and the network prefix and prefix length of a subnet to which the upper-level AR belongs by referring to individual cells laid out horizontally with a cell where the link layer address of the AP is described as a starting point.

The structure of the AP-AR correspondence information 40 shown in FIG. 2 is one example, and the AP-AR correspondence information 40 is not limited to this structure. Other information than the link layer address of an AP, the link layer address of an AR, and the network prefix and prefix length of a subnet (for example, the IPv6 address of an AR, and information about the functions the AR supports) may be described in the AP-AR correspondence information 40.

Although the AP-AR correspondence information 40 shown in FIG. 2 describes information relating to the connection relationship between an AR 21 and an AP 22 (AP22-AR21 correspondence information), information relating to the connection relationship between an AR 21 and an AP 23 (AP23-AR21 correspondence information), information relating to the connection relationship between an AR 31 and an AP 32 (AP32-AR31 correspondence information), and information relating to the connection relationship between an AR 31 and an AP 33 (AP33-AR31 correspondence information), information relating to the connection relationship between an arbitrary AP and AR can be set for those information relating to the connection relationships. A method of holding the AP-AR correspondence information 40 in the MN 10 is also arbitrary. Under the local environment of the MN 10, for example, the AP-AR correspondence information 40 stored in a portable memory medium may be coped or moved into the MN 10, information relating to the connection relationship between the AR 21 and the AP 23 may be input directly by using operation means (a keyboard or a mouse or the like) of the MN 10, and saved as the AP-AR correspondence information 40. For example, the MN 10 can acquire the AP-AR correspondence information 40 over a communication network.

Particularly, it is expected that a mobile IPv6 network is used when services are carried out in a limited area by a company LAN (Local Area Network), a local autonomous community, a network provider or the like. In such a network system, the number of APs and ARs which are provided by each company, provider or the like is limited, it is possible to describe information relating to all the AP-AR connection relationships in the AP-AR correspondence information 40, and store the AP-AR correspondence information 40 in the AP-AR correspondence information storage means 11 beforehand.

When there are large numbers of APs and ARs, AP-AR correspondence information 40 describing only information relating to the AP-AR connection relationship in a subnet to which the MN 10 is currently connected, or information relating to the AP-AR connection relationship in a subnet located in the neighborhood (a subnet which is a possible target to which the subnet the MN 10 is currently connected to is to be changed) can be saved in the MN 10. In this case, as one example, the MN 10 may download only the necessary AP-AR correspondence information 40 from a predetermined communication apparatus (AP-AR correspondence information managing apparatus) provided by the provider of the connection service to the mobile IPv6 network, or may receive broadcast information including the necessary AP-AR correspondence information 40 from the AP-AR correspondence information managing apparatus.

An AR may be installed with the function of the AP-AR correspondence information managing apparatus. In this case, as the AR has executed a process of acquiring information relating to the AP-AR connection relationship in a neighboring subnet where the ordinary fast handover is carried out (a process corresponding to step S605 shown in FIG. 6) beforehand to generate AP-AR correspondence information 40, the MN 10 can acquire the AP-AR correspondence information 40 from the AR currently in connection.

When the AP-AR correspondence information managing apparatus manages AP-AR correspondence information, it is possible to cope with a dynamic change in network system. That is, even in a case where the contents of the AP-AR correspondence information 40 are changed, such as a case where information on the IPv6 address of an AR is changed, or a case where an AP or AR has failed, or is newly added to the network, the MN 10 can flexibly cope with a dynamic change in network as the MN 10 periodically checks the AP-AR correspondence information 40 in the AP-AR correspondence information managing apparatus, or the AP-AR correspondence information managing apparatus notifies the MN 10 of update of the correspondence information, so that the MN 10 can always hold latest AP-AR correspondence information 40.

### <First Operational Example: L2 handover between different subnets>

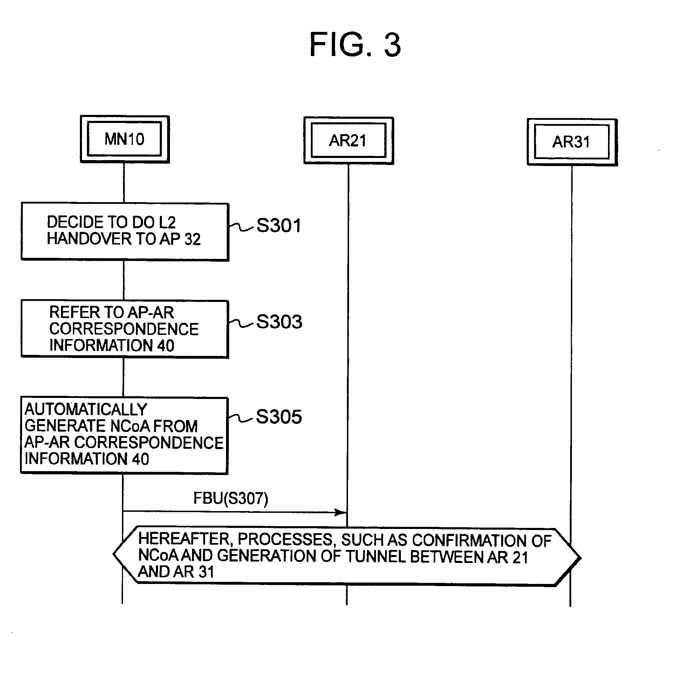

Next, an explanation will be given of an operation when the MN 10 that has the AP-AR correspondence information storage means 11 having stored the AP-AR correspondence information 40 shown in FIG. 2 performs an L2 handover. FIG. 3 is a sequence chart illustrating a first operational example when the MN performs the L2 handover in the radio communication system according to the embodiment of the invention. The sequence chart shown in FIG. 3 illustrates individual processes of the MN 10, the AR 21 and the AR 31 along the time axis when the MN 10 moves into a radio coverage area 34 formed by the AP 32 through an overlap area 26 from inside a radio coverage area 25 formed by the AP 23 in the radio communication system shown in FIG. 1.

The MN 10 having the AP-AR correspondence information 40 shown in FIG. 2 is moving in the radio coverage area 25. In a case where the MN 10 determines that it is preferable to stop communicating with the AP 23 and start communicating with the AP 32 in the overlap area 26 due to some conditions (for example, conditions on the radio signal strengths), the MN 10 decides to switch connection (L2 handover) of an AP at the communication destination (step S301: DECIDE TO DO L2 HANDOVER TO AP32) as done at step S601 shown in FIG. 6.

According to the conventional fast handover technology, the MN 10 then transmits an RtSolPr message to the AR 21, whereas according to the invention, the MN 10 refers to the AP-AR correspondence information 40 (step S303: REFER TO AP-AR CORRESPONDENCE INFORMATION 40). Then, the MN 10 searches the AP-AR correspondence information 40 for the link layer address of the AP 32 acquired by reception or the like of a beacon from the AP 32, and acquires various kinds of information, such as the link layer address of an AR associated with the link layer address of the AP 32, the network prefix of a subnet, and the prefix length of the subnet. Through the operation, the MN 10 can acquire the link layer address of the AR 31 located at an upper level of the AP 32, the network prefix of a subnet 30 to which the AR 31 belongs, and the prefix length of the subnet 30 to which the AR 31 belongs.

Then, the MN 10 combines the network prefix and prefix length of the subnet 30, acquired by referring to the AP-AR correspondence information 40 at step S303, with the link layer address of the MN 10 to thereby generate an NCoA which matches the subnet 30 constituted by the AR 31 (step S305: AUTOMATICALLY GENERATE NCoA from AP-AR CORRESPONDENCE INFORMATION 40).

After the generation of the NCoA, the same procedures as those in the conventional fast handover are executed. That is, the AR 21 is notified of the NCoA (FBU) (step S307: FBU), and further, through confirmation of the NCoA at the AR 31, the process of generating a tunnel between the AR 21 and the AR 31, and the like, the MN 10 can finish registering the NCoA which matches the subnet 30 while being connected to the AP 21.

According to the first operational example of the invention, in this manner, the MN 10 can automatically generate the NCoA of the subnet 30 to which the AR 31 having control over the AP 32 belongs by referring to the AP-AR correspondence information 40 stored in the AP-AR correspondence information storage means 11 immediately after determining the AP 32 to which the L2 handover is done. Therefore, processes of transmitting and receiving an RtSolPr message and a PrRtAdv message between the MN 10 and the AR 21 (steps S603 and S607 shown in FIG. 6), and a process in which the AR 21 acquires information on the AR 31 (step S605 shown in FIG. 6) are omitted, thus overcoming the above-described first and third problems.

### <Second Operational Example: L2 handover in the same subnet>

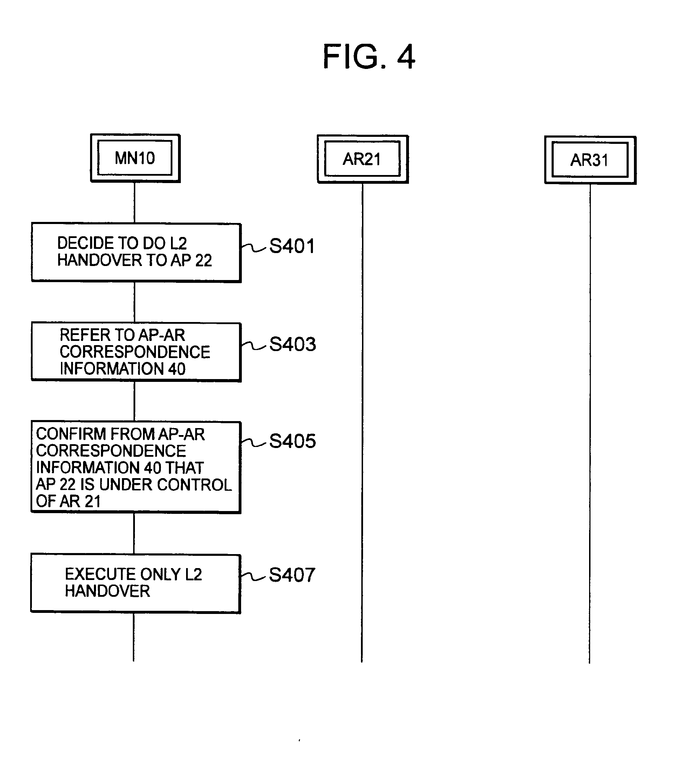

FIG. 4 is a sequence chart illustrating a second operational example when the MN performs the L2 handover in the radio communication system according to the embodiment of the invention. The sequence chart shown in FIG. 4 illustrates individual processes of the MN 10, the AR 21 and the AR 31 along the time axis when the MN 10 moves into a radio coverage area 24 formed by the AP 22 from inside the radio coverage area 25 formed by the AP 23 in the radio communication system shown in FIG. 1.

The MN 10 having the AP-AR correspondence information 40 shown in FIG. 2 is moving in the radio coverage area 25. In a case where the MN 10 determines that it is preferable to stop communicating with the AP 23 and start communicating with the AP 22 in an area where the radio coverage area 24 and the radio coverage area 25 overlap each other due to some conditions (for example, conditions on the radio signal strengths), the MN 10 decides to switch connection (L2 handover) of an AP at the communication destination (step S401: DECIDE TO DO L2 HANDOVER TO AP22).

Then, as in the first operational example, the MN 10 refers to the AP-AR correspondence information 40 (step S403: REFER TO AP-AR CORRESPONDENCE INFORMATION 40), searches the AP-AR correspondence information 40 for the link layer address of the AP 22, and acquires various kinds of information, such as the link layer address of an AR associated with the link layer address of the AP 22, the network prefix of a subnet, and the prefix length of the subnet.

At this time, the MN 10 confirms that the AR corresponding to the AP 22 is the same as the AR 21 connected to the AP 23 (step S405: CONFIRM FROM AP-AR CORRESPONDENCE INFORMATION 40 THAT AP 22 IS UNDER CONTROL OF AR 21). That is, the MN 10 can grasp that the L2 handover from the AP 23 to the AP 22 is an L2 handover within the same subnet, and that a process of changing the CoA (NCoA acquisition process) need not be performed, and, in the subsequent processes, does not perform processes in the layer of the mobile IPv6, such as generation and registration of the NCoA, and executes only the L2 handover (step S407: EXECUTE ONLY L2 HANDOVER).

According to the second operational example of the invention, in this manner, immediately after determining the AP 22 to which the L2 handover is done, the MN 10 can easily grasp that the AP 23 which has performed communication before the L2 handover and the AP 22 which performs communication after the L2 handover are under the control of the same AR 21, and the L2 handover from the AP 23 to the AP 22 is an L2 handover within the same subnet by referring to the AP-AR correspondence information 40 stored in the AP-AR correspondence information storage means 11.

According to the conventional fast handover, to check whether or not it is an L2 handover within the same subnet, the MN 10 needs to receive a PrRtAdv message from the AR 21 and refer to information on the AR 31 included in the PrRtAdv message. According to the second operational example of the invention, however, the MN 10 can check whether or not it is an L2 handover within the same subnet, without making communication with other communication apparatuses, such as an MN or AR, thereby overcoming the above-described first to third problems (particularly, the second problem).

<Third Operational Example: when information on an AP to which an L2 handover is to be done is not present in AP-AR correspondence information 40>
While the explanations of the first and second operational examples have been given of the case where the MN 10 has AP-AR storage information 40 describing information on an AP (link layer address of the AP) to which an L2 handover is to be done, the explanation of the third operational example will be given of a case where correspondence information relating to an AP to which an L2 handover is to be done is not present in the AP-AR storage information 40.

FIG. 5 is a sequence chart illustrating the third operational example when the MN performs the L2 handover in the radio communication system according to the embodiment of the invention. The sequence chart shown in FIG. 5 illustrates individual processes of the MN 10, the AR 21 and the AR 31 along the time axis when the MN 10 moves into a radio coverage area 34 formed by the AP 32 through an overlap area 26 from inside a radio coverage area 25 formed by the AP 23 in the radio communication system shown in FIG. 1. As mentioned above, it is assumed that in the third operational example, correspondence information relating to the AP 32 to which an L2 handover is to be done (i.e., AP32-AR31 correspondence information in the AP-AR correspondence information shown in FIG. 2) is not present in the AP-AR correspondence information 40 the MN 10 has.

The MN 10 having the AP-AR correspondence information 40 is moving in the radio coverage area 25. As in the first operational example, the MN decides to switch connection (L2 handover) from the AP 23 to the AP 32 (step S501: DECIDE TO DO L2 HANDOVER TO AP32), refers to the AP-AR correspondence information 40 (step S503: REFER TO AP-AR CORRESPONDENCE INFORMATION 40), and searches the AP-AR correspondence information 40 for the link layer address of the AP 32.

However, the information on the AP 32 is not described in the AP-AR storage information 40, and the MN 10 cannot find the correspondence information relating to the AP 32 from the AP-AR storage information 40. As apparent from the above, when the information on the AP 32 at the L2 handover destination is not found, the MN 10 determines that there is no correspondence information relating to the AP 32 in the AP-AR storage information 40 (step S505: DETERMINE THAT THERE IS NO CORRESPONDENCE INFORMATION RELATING TO AP 32 IN AP-AR CORRESPONDENCE INFORMATION 40), and carries out processes by the conventional fast handover (specifically, processes at and following step S603 in FIG. 6).

Although the explanation of the third operational example has been given of the case where the correspondence information relating to the AP at the L2 handover destination cannot be acquired from the AP-AR correspondence information 40 at the time of the L2 handover between different subnets (first operational example), the same is true of a case where the correspondence information relating to the AP at the L2 handover destination cannot be acquired from the AP-AR correspondence information 40 at the time of the L2 handover in the same subnet (second operational example), the flow has only to proceed to processes by the conventional fast handover.

The flow may also proceed to processes by the conventional fast handover in a case where, for example, the link layer address of the AP 32 at the L2 handover destination is present in the AP-AR correspondence information 40 but the network prefix of the AR 31 which has that AP 32 under control is not set.

According to the third operation example, as explained above, in a case where the MN 10 cannot acquire correspondence information relating to a desired AP from the AP-AR correspondence information 40 at the time of the L2 handover, a smooth handover is realized to continue the radio communication by allowing the processes by the conventional fast handover to be performed.

In a case where the MN 10 is connected to an AR which uses only the stateful CoA allocation system, an NCoA generated by the MN 10 does not match a subnet to which that AR belongs. In particular, therefore, regarding information on the AR which uses only the stateful CoA allocation system and on an AP which is under the control of the AR, it is desirable that they should not be described in the AP-AR correspondence information 40, or should clarify that only the stateful CoA allocation system is adopted. Accordingly, with respect to the AR which uses only the stateful CoA allocation system, the MN 10 can acquire a CoA allocated in a stateful mechanism by carrying out the processes by the conventional fast handover.

In the explanations of the above-described first to third operational examples according to the invention, the explanations have been given of the first to third operation examples separately, but it is desirable that the MN 10 should be structured in such a manner as to separately perform operations regarding the first to third operational examples according to the result of referring to the AP-AR correspondence information 40. That is, in a case where the L2 handover between different subnets is confirmed as a result of referring to the AP-AR correspondence information 40, the MN 10 generates an NCoA which can match a destination subnet, and in a case where the L2 handover in the same subnet is confirmed, the MN carries out only the L2 handover without changing the NCoA, and in a case where information on the L2 handover destination AP and information on an AR which has that AP under control cannot be acquired merely by referring to the AP-AR correspondence information, it is desirable that the flow should proceed to the processes by the conventional fast handover.

To work out the invention, it is not necessary to change basic specifications of a network, i.e., the basic specifications of an AR and AP, and the invention can be worked out together with the conventional fast handover technology. Therefore, the invention can be realized by installing a computer program for executing the above-described various processes in the MN 10 (for example, the process of generating an NCoA which matches a subnet at the handover destination by referring to the AP-AR correspondence information) into the MN 10 which can execute the conventional fast handover.

### INDUSTRIAL APPLICABILITY

The communication handover method and the communication system according to the invention can realize an efficient handover by reducing loads on a mobile node and an access router and communication traffics thereof while maintaining a packet loss rate improved by the fast handover technology, is applied to the technical field of radio communication which speeds up the handover of the mobile node which carries out radio communication, and more particularly, is applied to a technology for speeding up a handover at a mobile node which carries out radio communication by using the mobile IPv6 protocol that is the next generation Internet protocol.

## Claims

1. A communication handover method for use in a mobile node in a communication system in which a plurality of access routers each constituting a subnet are connected together over a communication network and at least one or more of access points forming a unique communication available area are connected to each of said plurality of access routers, said mobile node being so structured as to communicate with said access router connected with said access points, through radio communication with said access points within said communication available area, said communication handover method comprising:
a storing step of storing correspondence information describing a correspondence relationship between information on said access points and information on said access router connected to said access points into a predetermined information storage means of said mobile node;
a reception step of receiving information on another access point from said another access point when communication is switched over from an access point currently in communication to said another access point;
an acquisition step of acquiring information on that access router to which said another access point is connected from said correspondence information based on the information on said another access point received at said reception step; and
an address generation step of generating address information in said subnet constituted by said access router, from the information on said access router acquired at said acquisition step.

2. The communication handover method according to claim 1, comprising an address information transmission step of transmitting said address information generated at said address generation step to said access router to which said access point currently in communication is connected, through said access point currently in communication.

3. A communication handover method for use in a mobile node in a communication system in which a plurality of access routers each constituting a subnet are connected together over a communication network and at least one or more of access points forming a unique communication available area are connected to each of said plurality of access routers, said mobile node being so structured as to communicate with said access router connected with said access points, through radio communication with said access points within said communication available area, said communication handover method comprising:
a storing step of storing correspondence information describing a correspondence relationship between information on said access points and information on said access router connected to said access points into a predetermined information storage means of said mobile node;
a reception step of receiving information on another access point from said another access point when communication is switched over from an access point currently in communication to said another access point;
an acquisition step of acquiring information on that access router to which said another access point is connected from said correspondence information based on the information on said another access point received at said reception step;
a determination step of determining from the information on said access router acquired at said acquisition step whether or not changing address information currently assigned in connection of said subnet is necessary when communication is switched from said access point currently in communication to said another access point; and
an address control step of performing such control as to continuously use said currently assigned address information upon determination that it is not necessary to change said address information at said determination step.

4. The communication handover method according to claim 3, wherein at said determination step, comparison is made to check whether or not information relating to the subnet of said access router connected to said access point currently in communication and information relating to the subnet of said access router connected to said another access point match with each other, and it is determined that changing said address information is not necessary when both information match with each other.

5. The communication handover method according to claim 1 or 3, comprising a process switching step of performing a process based on conventional handover when the information on said access router to which said another access point is connected cannot be acquired from said correspondence information at said acquisition step.

6. The communication handover method according to claim 1 or 3, comprising:
a correspondence information reception step of receiving information relating to a change in said correspondence information from a predetermined communication apparatus which manages said correspondence information or said access router; and
a correspondence information update step of updating said correspondence information stored in said predetermined information storage means with the information relating to the change in said correspondence information.

7. The communication handover method according to claim 6, comprising an information check step of periodically checking said predetermined communication apparatus or said access router to see whether or not there is information relating to a new change of said correspondence information.

8. The communication handover method according to claim 1 or 3, wherein a link layer address of said access point is used as the information on said access point, and a link layer address of said access router, a network prefix and a prefix length of said subnet constituted by said access router are used as the information on said access router.

9. The communication handover method according to claim 1 or 3, wherein said correspondence information describes a correspondence relationship between the information on said access point in said subnet to which said mobile node is currently connected, and the information on said access router, and a correspondence relationship between the information on said access point in said subnet present in a neighborhood of said subnet to which said mobile node is currently connected and the information on said access router.

10. The communication handover method according to claim 1 or 3, wherein said correspondence information describes only a correspondence relationship relating to said access router which employs a scheme of permitting said mobile node to generate the address information in said subnet, and said access point connected to said access router.

11. A communication handover program for allowing a computer to execute the communication handover method according to claim 1 or 3.

12. A communication system in which a plurality of access routers each constituting a subnet are connected together over a communication network and at least one or more of access points forming a unique communication available area are connected to each of said plurality of access routers, and a mobile node present in said communication available area is so structured as to communicate with said access router connected with said access points, through radio communication with said access points, wherein
said mobile node has correspondence information storage means for storing correspondence information describing a correspondence relationship between information on said access points and information on said access router connected to said access points into a predetermined information storage means of said mobile node, and
said mobile node is structured in such a way that when communication is switched over from an access point currently in communication to another access point, information on that access router to which said another access point is connected is acquired based on the information on said another access point received from said another access point by referring to said correspondence information, and address information in said subnet constituted by said access router is generated from said acquired information on said access router.

13. A communication system in which a plurality of access routers each constituting a subnet are connected together over a communication network and at least one or more of access points forming a unique communication available area are connected to each of said plurality of access routers, and a mobile node present in said communication available area is so structured as to communicate with said access router connected with said access points, through radio communication with said access points, wherein
said mobile node has correspondence information storage means for storing correspondence information describing a correspondence relationship between information on said access points and information on said access router connected to said access points into a predetermined information storage means of said mobile node, and
said mobile node is structured in such a way that when communication is switched over from an access point currently in communication to another access point, information on that access router to which said another access point is connected is acquired based on the information on said another access point received from said another access point by referring to said correspondence information, and it is determined from the acquired information on said access router whether or not changing address information currently assigned in connection of said subnet is necessary when communication is switched from said access point currently in communication to said another access point, and said currently assigned address information is continuously used upon determination that it is not necessary to change said address information.

14. The communication system according to claim 12 or 13, structured in such a way as to execute a process by conventional handover when said mobile node cannot acquire the information on said access router to which said another access point is connected, from said correspondence information.

15. The communication system according to claim 12 or 13, wherein a predetermined communication apparatus which manages said correspondence information is connected to said communication network, and is so structured as to transmit said correspondence information to said mobile node.

16. The communication system according to claim 12 or 13, wherein when a change in the information on said access point or the information on said access router occurs, said predetermined communication apparatus receives the information on said access point or the information on said access router after generation of the change, from said access router, updates said correspondence information managed by said predetermined communication apparatus, and informs said mobile node that said correspondence information has been changed.

17. The communication system according to claim 12 or 13 structured in such a way that management of said correspondence information is performed by said access router to realize said predetermined communication apparatus by said access router.
